# EUROPÄISCHE PATENTSCHRIFT

(11) **EP 3 802 918 B1**
(45) Veröffentlichungstag und Bekanntmachung des Hinweises auf die Patenterteilung: **11.05.2022**
(21) Anmeldenummer: 19729194.1
(22) Anmeldetag: 28.05.2019
(51) Int. Cl.: C25B 1/04, C25B 9/73, C25B 15/08

(54) **VERFAHREN UND VORRICHTUNG ZUM BEREITSTELLEN VON WENIGSTENS EINEM PRODUKTSTROM DURCH ELEKTROLYSE**
METHOD AND DEVICE FOR PROVIDING AT LEAST ONE PRODUCT STREAM BY ELECTROLYSIS
PROCÉDÉ ET DISPOSITIF POUR LA FOURNITURE D'AU MOINS UN COURANT DE PRODUIT PAR ÉLECTROLYSE

(30) Priorität: 30.05.2018 DE 102018208624
(43) Veröffentlichungstag der Anmeldung: 14.04.2021
(73) Patentinhaber: thyssenkrupp nucera AG & Co. KGaA, 44141 Dortmund (DE)
(72) Erfinder: KLINK, Stefan, 44789 Bochum (DE); POLCYN, Gregor Damian, 44227 Dortmund (DE); BAUMGARD, Florian, 44139 Dortmund (DE); PAUSCH, Jörg, 58239 Schwerte (DE); DAHLHUES, Klaus, 45731 Waltrop (DE); BERGS, Dominik, 44795 Bochum (DE)
(74) Vertreter: thyssenkrupp Intellectual Property GmbH
(86) Internationale Anmeldenummer: PCT/EP2019/063722
(87) Internationale Veröffentlichungsnummer: WO 2019/229019

(56) Entgegenhaltungen:
- WO-A1-2016/068842
- KR-B1- 101 158 118
- US-A1- 2008 257 740
- US-A1- 2011 180 417
- US-A1- 2012 222 955
- US-A1- 2014 367 272
- US-A1- 2017 247 800

## Beschreibung

### TECHNISCHES GEBIET

Die Erfindung betrifft eine Vorrichtung und ein Verfahren zum Bereitstellen von wenigstens einem Produktstrom, insbesondere Wasserstoff, durch Elektrolyse mittels eines Elektrolyseurs, nämlich eine Vorrichtung und ein Verfahren gemäß dem Oberbegriff des jeweiligen unabhängigen bzw. nebengeordneten Anspruchs.

### HINTERGRUND

Eine Elektrolyseanlage besteht üblicher Weise aus einem Elektrolyseur, einem kombinierten Elektrolytsystem, und einem Gassystem. Der Elektrolyseur weist eine Vielzahl von elektrochemischen Zellen auf, welche in einem oder mehreren Gerüsten zusammengefasst sind. Im jeweiligen Gerüst werden die Zellen z.B. in der Art eines Hängeregisters in einen Rahmen des Gerüstes eingehängt, so dass die Zellen bei Wartung oder Reparatur nach oben entnommen werden können (Bauhöhe einer Gebäude-Halle mindestens doppelt so groß wie die Höhe der Zelle). Beispielsweise werden ca. drei bis fünf Gerüste vorgesehen, welche jeweils einzeln oder zusammen gespeist werden können.

Der Ablauf von Elektrolyt aus allen Zellen bzw. aus allen Gerüsten wird bevorzugt in einer einzigen Sammelleitung zusammengefasst (so genannter Header). In unmittelbarer Nähe zum Elektrolyseur (üblicherweise unten oder seitlich neben dem Elektrolyseur) sind dafür je Elektrodenseite (Anode und Kathode) jeweils bevorzugt eine, wahlweise aber auch mehrere (Freispiegel-)Ablaufleitungen (so genannte Ablaufheader) vorgesehen. Dort wird das bei der Elektrolyse zur Gasgewinnung erzeugte Zweiphasengemisch (bei Wasserelektrolyse insbesondere Anolyt und Sauerstoff bzw. Katholyt und Wasserstoff) aus den Zellen gesammelt und getrennt. Dabei kann der Begriff "Header" allgemein als externe Sammelleitung verstanden werden; in Abgrenzung zu Zellen-intern verwendeten Manifolds (Sammelleitungen) sind Header extern von den Zellen angeordnet. Ein Header kann den Ablauf aus einer Vielzahl von Zellen (z.B. 260 Zellen) zusammenführen, insbesondere aller Zellen eines oder mehrerer Gerüste oder auch der gesamten Anlage. Die Gasphase wird nach oben abgeleitet, während die Flüssigphase bzw. der Elektrolyt (Anolyt und Katholyt) nach unten in die so genannten Anolyt- bzw. Katholytbehälter zum Sammeln des Elektrolyten geleitet werden. Letztere dienen demnach als Entleerungsbehälterfür aus den Zellen ausgeleiteten Elektrolyt sowie als eine Art Puffer für ein Pumpsystem zum Sicherstellen eines Elektrolytkreislaufs.

Erwähnenswert ist, dass eine Elektrolyseanlage optional in kombinierter Betriebsweise (insbesondere "Kreuzbetrieb") betrieben werden kann, wobei Anolyt- und Katholyt-Seite zusammen kombiniert betrieben werden. Optional kann die Betriebsweise auch eine separate Betriebsweise sein (insbesondere "Parallelbetrieb"), wobei jede Seite individuell und separat von der anderen Seite betrieben wird.

Um einen freien Ablauf aus den Zellen sicherzustellen, müssen Elektrolyseur und Ablaufleitungen oberhalb vom Anolyt- und Katholytbehälter aufgestellt werden. Dadurch ergibt sich eine mindestens einzuhaltende Bauhöhe der Elektrolyseanlage, welche in vielen Fällen, je nach Aufstellungsort, die maximal zulässige oder maximal gewünschte Bauhöhe überschreiten muss, was dann zu signifikanten Bau- und Ausrüstungskosten führt. Daher besteht schon seit längerer Zeit Interesse an einer möglichst kompakten Elektrolyseanlage mit guter Funktionalität.

Aus US 2012/0222955 A1 ist eine Hochdruck-Wasserstofferzeugungsanlage bekannt, in der ein Tank mit einem Ende einer Rückführungsleitung verbunden ist, deren anderes Ende mit einer Sauerstoffauslassöffnung eines Wasserelektrolyseapparates verbunden ist. Der an der Anode erzeugte Sauerstoff wird mit verbrauchten Wasser vermischt über die Rückführungsleitung in den Tank geführt, wo sie voneinander getrennt werden. Weitere vorbekannte Elektrolysevorrichtungen und Elektrolyseverfahren sind beispielsweise in den folgenden Veröffentlichungen beschrieben: US 2014/0367272 A1, US 2017/0247800 A1, US 6,338,786 B1, US 8,137,513 B2, EP 2 905 359 A1.

### BESCHREIBUNG DER ERFINDUNG

Aufgabe der Erfindung ist es, eine Elektrolyseanlage (Vorrichtung), insbesondere zur elektrochemischen Erzeugung von Wasserstoff durch Wasserelektrolyse, sowie ein Verfahren mit den eingangs beschriebenen Merkmalen zur Verfügung zu stellen, womit die Elektrolyse bzw. die dafür erforderliche Anlagentechnik weiter optimiert werden kann, insbesondere auch in kostengünstiger und platzsparender Ausgestaltung und/oder hinsichtlich Betriebssicherheit. Die Aufgabe kann auch allgemein darin gesehen werden, ein attraktives verfahrens- und anlagentechnisches Gesamtkonzept für die Elektrolyse bereitzustellen, welches bevorzugt auch mit möglichst vielen bisher eingesetzten Prozess-Arten der Elektrolyse kompatibel ist.

Diese Aufgabe wird erfindungsgemäß gelöst durch eine Elektrolysevorrichtung nach Anspruch 5. Hierdurch können diverse vorrichtungstechnische Vorteile in Bezug auf die Elektrolysevorrichtung und auch in Bezug auf damit gekoppelte Komponenten erzielt werden. Ferner ergeben sich prozesstechnische Vorteile und Variationsmöglichkeiten. Beispielsweise kann komplett auf Gasabführungen aus einem Anolyt- bzw. Katholytbehälter verzichtet werden. Der Mehrfunktions-Sammelbehälter kann dabei zur Pumpenvorlage eingerichtet und angeordnet bzw. verschaltet oder verrohrt sein.

Es hat sich gezeigt, dass die erfindungsgemäße Anordnung nicht auf die "Single Cell"-Bauweise beschränkt ist, sondern auch auf die weiteren üblichen konstruktiven Konzepte von Elektrolysevorrichtungen angewandt werden kann. Auch muss keine Einschränkung auf z.B. die Wasserelektrolyse erfolgen, denn die erfindungsgemäße Anordnung liefert die hier beschriebenen Vorteile auch bei der Elektrolyse beliebiger anderer Stoffe.

Die durch die einzelnen Funktionen vorgegebene Struktur, bzw. das konstruktive Konzept, kann erfindungsgemäß durch die funktionale Integration aufgebrochen werden, insbesondere auch mit dem Vorteil, dass die Anlage auf flexiblere Weise gestaltet oder ausgelegt werden kann, und z.B. auch hinsichtlich Bauhöhe optimiert werden kann. Insbesondere können die folgenden Vorteile der erfindungsgemäßen Anordnung genannt werden: Kostenreduktion hinsichtlich Ausrüstung, Rohren, Stahlbau; kleinere Anlagengröße; verringerte Bauhöhe; kürzere Bauzeit; verringertes Risiko bezüglich eines Flutens des Mehrfunktions-Sammelbehälters; erhöhte Betriebssicherheit; verringerter Aufwand hinsichtlich Instrumentierung und Prozessführung. Beispielsweise können mehrere Meter Bauhöhe eingespart werden, auch bei einer die Vorrichtung überspannenden Gebäude-Halle. Durch Verzicht auf einen separaten Sammelbehälter kann die Bauhöhe auch dann signifikant verringert werden, wenn das Volumen des Mehrfunktions-Sammelbehälters vergleichsweise groß ist und der Mehrfunktions-Sammelbehälter unterhalb von den Zellen angeordnet ist.

Der Mehrfunktions-Sammelbehälter ist ein Mehrfunktions-Ablaufheader MFH mit integriertem Funktionsumfang. Der Mehrfunktions-Sammelbehälter kann insbesondere auch als Freispiegel-Sammelbehälter bezeichnet werden, insbesondere Freispiegel-Sammeldurchlaufbehälter. Mit dem Begriff "Freispiegel" wird dabei bisher üblicherweise auf eine Leitung Bezug genommen, welche nicht vollständig gefüllt ist, welche beispielsweise nur halbgefüllt ist. Bisher üblicherweise als Freispiegelleitungen ausgeführte Ablaufheader weisen eine Vielzahl an Zuführungen für Elektrolyt auf (entsprechend den Abläufen der Vielzahl von Elektrolysezellen) und ferner mindestens einen Auslass für die Flüssigphase und einen Auslass für die Gasphase. Der Begriff "Freispiegel" kann dabei als Indiz für die verfahrenstechnische Option verstanden werden, eine Gasphase aus einer Leitung separat von einer Flüssigphase abziehen zu können. Der erfindungsgemäße MFH ist durch die erfindungsgemäße Integration in das erfindungsgemäße Anlagenkonzept und durch die erfindungsgemäße Auslegung für die Vielzahl von Funktionen (insbesondere bis zu sechs Funktionen) gekennzeichnet.

Als Elektrolyseur ist dabei bevorzugt eine Vorrichtung eingerichtet zur Elektrolyse zu verstehen. Als Elektrolyt ist im Folgenden bevorzugt jede Art von Fluid zu einem beliebigen Verfahrenszeitpunkt und in einer beliebigen Phasenzusammensetzung in einer Elektrolysevorrichtung zu verstehen, sei es zum (Verfahrens-)Zeitpunkt des Ausleitens aus den Zellen, sei es zum (Verfahrens-)Zeitpunkt des Rückführens durch ein Pumpsystem. Der Begriff Elektrolyt umfasst definitionsgemäß auch Zweiphasengemische aus Anolyt/Katholyt und Gas, schließt als auch die Gasphase begrifflich mit ein. Der Begriff Elektrolyt umfasst demnach gemäß der vorliegenden Definition insbesondere jede Art von bei der Elektrolyse erzeugte Fluide oder Zweiphasengemische, insbesondere auch Schaum.

Als Zelle ist dabei bevorzugt eine Einheit des Elektrolyseurs zu verstehen, in welcher sich die Elektrolyse vollziehen kann, insbesondere unabhängig von weiteren, benachbarten Zellen. Mehrere Zellen können zu einem Gerüst von z.B. 100 Zellen zusammengefasst sein.

Als Pumpsystem ist dabei bevorzugt ein System eingerichtet für eine Kreislaufführung des Elektrolyten zu verstehen, sei es in Bezug auf Anolyt und/oder in Bezug auf Katholyt.

Als "integral" ist dabei bevorzugt eine Eingliederung oder Verschmelzung einer Mehrzahl von Funktionen und/oder Anlagenkomponenten und/oder Verfahrensschritten zu verstehen.

Im Folgenden wird beispielhaft die Wasserelektrolyse beschrieben, nämlich durch Bezugnahme auf die Anodenseite (Anolyt bzw. Sauerstoff). Für die Kathodenseite (Katholyt bzw. Wasserstoff) gilt diese Beschreibung analog.

Gemäß dem Stand der Technik ist die Funktion der Anolyt-Ablaufheader (Ablaufleitungen) von der Funktion der Anolytbehälter getrennt. Der jeweilige Anolyt-Ablaufheader dient dabei dem Zusammenführen des Anolyt-Zweiphasengemisches (insbesondere umfassend Sauerstoff) aus den einzelnen Komponenten (insbesondere Zellen) des Elektrolyseurs. Der Anolytbehälter hingegen dient als Pumpenvorlage oder Zwischenlager für Anolyt.

Gemäß der vorliegenden Erfindung werden die Funktionen eines klassischen Anolyt-Ablaufheaders sowie eines klassischen Anolytbehälters zusammengeführt durch vorrichtungs- und verfahrenstechnische Kombination dieser Einrichtungen zu einem gemeinsamen integralen Anolyt-Headertank (Mehrfunktions-Sammelbehälter bzw. Mehrfunktions-Ablaufheader MFH). Erfindungsgemäß kann der bisher gemäß dem Stand der Technik übliche Anolytbehälter ersetzt werden; ein separater Anolytbehälter kann entbehrlich werden. Erfindungsgemäß kann das Volumen des bisher üblichen Anolyt-Ablaufheaders vergrößert werden. Im dadurch geschaffenen Mehrfunktions-Headertank (MFH) kann das Zweiphasen-Gemisch aus Anolyt und Sauerstoff aus allen Zellen gesammelt werden. Zusätzlich kann optional auch die Funktion einer Pumpenvorlage und eines Zwischenlagers für den Anolytkreislauf bereitgestellt werden, mittels des MFH. Dabei können das Betriebsvolumen und der Füllstand für den MFH auch derart groß gewählt bzw. eingestellt werden, dass durch eine entsprechend niedrige Fließgeschwindigkeit eine ausreichend vollständige Phasentrennung (Gas- und Flüssigphase) sichergestellt werden kann und ferner ein ausreichend großes Volumen als Pumpenvorlage bereitgestellt werden kann. Ferner kann dabei auch das Gesamtvolumen des MFH optional auch derart groß gewählt werden, dass die einzelnen Komponenten bzw. Zellen des jeweiligen Gerüstes des Elektrolyseurs vollständig in den MFH entleert werden können (Drain-Funktion).

Dank des erfindungsgemäßen Mehrfunktions-Sammelbehälters MFH können zudem die Anzahl der erforderlichen Ausrüstungs-Teile verringert und dadurch auch Kosten eingespart werden. Dabei kann die Gesamtbauhöhe beispielsweise um circa drei bis vier Meter verringert werden. Hierdurch kann vorteilhafter Weise auch eine direkte Auswirkung auf die Gesamtbauhöhe des Zellensaals sichergestellt werden (bzw. indirekt die Höhe einer Maschinenhalle, Lagerhalle). Dies ermöglicht auch weitere Kostenersparnisse insbesondere hinsichtlich Stahlbau und Rohrleitungsbau.

Als Mehrfunktions-Sammelbehälter MFH ist dabei bevorzugt ein Behälter zu verstehen, welcher, im Gegensatz zu einer Leitung, eingerichtet ist für eine Mindestverweildauer des zu sammelnden Fluides, wobei ein unterer Schwellwert für die Mindestverweildauer insbesondere durch zumindest zeitweise nicht verlagertes Fluid (ortsfest angeordnetes Fluid) definiert ist (Tank-Funktion), und wobei die Mindestverweildauer insbesondere durch das Volumen des Sammelbehälters definierbar ist. Der MFH ist eingerichtet zum Sammeln des Fluides durch Verringern der Durchflussgeschwindigkeit des Fluides, insbesondere auf die Durchflussgeschwindigkeit Null (0) während der Mindestverweildauer.

Für die integrierte Multifunktionalität kann der MFH mit vergleichsweise großem Volumen bereitgestellt werden. Im Gegensatz dazu war ein großes Volumen bisher für die separate der Funktion von Ablaufheadern nicht sinnvoll. Ebenso konnte bisher nicht an eine funktionale Integration gedacht werden, insbesondere nicht bei Chlor-Alkali-Mischungen, da dadurch Abstriche hinsichtlich des Puffervolumens des Anolytbehälters hätten in Kauf genommen werden müssen.

Es hat sich gezeigt, dass die Funktionsintegration insbesondere bei der Wasserelektrolyse im Zusammenhang mit einem effizienten und attraktiven Verfahrens- und Anlagenkonzept realisiert werden kann. Bei der Wasserelektrolyse kann von einem veritablen Kreisprozess gesprochen werden. Es treten vergleichsweise geringe Füllstands-Schwankungen auf, insbesondere im Gegensatz zu Produktionsprozessen bei Chlor-Alkali-Mischungen. Es hat sich gezeigt, dass insbesondere bei der Wasserelektrolyse der gesamte Elektrolyt (Fluid), der aus dem jeweiligen Anolyt- oder Katholyt-Headertank (MFH) herausgefördert wird, auch in seiner Gesamtheit wieder in den entsprechenden Headertank zurückgeführt werden kann.

Durch die Möglichkeit, den MFH wahlweise an eine bestimmte Anzahl von Zellen oder Gerüsten zu koppeln (beispielsweise ein Anolyt-MFH für zwei Gerüste à 100 Zellen), kann von einem modularen Aufbau der Elektrolysevorrichtung gesprochen werden, wobei der MFH eine modulübergreifende Funktionsintegration sicherstellen kann. Der MFH kann dabei insbesondere in Abhängigkeit der zu koppelnden Zellen ausgelegt werden, beispielsweise volumenabhängig, beispielsweise auch in Hinblick auf einen bevorzugten Bereich für den Füllstand im MFH.

Erfindungsgemäß hat sich gezeigt, dass durch eine Funktionenintegration in den MFH und angepasste Auslegung des MFH insbesondere die folgenden Funktionen integral zusammen mittels einer einzigen verfahrenstechnischen Komponente (multifunktionale Verfahrensstufe) bereitgestellt bzw. sichergestellt werden können, wobei sich die jeweilige Funktion dabei auf eine Mehrzahl von Zellen bezieht, insbesondere auf alle Zellen wenigstens eines Gerüstes: Ableiten von Elektrolyt aus den Zellen (erste Funktion); Phasentrennen (zweite Funktion); Sammeln (dritte Funktion); Puffern des Elektrolyten, insbesondere auch hinsichtlich Volumenschwankungen aufgrund von Phasenänderungen oder Schaumbildung (vierte Funktion); Bereithalten bzw. Bereitstellen des Elektrolyten für einen Pumpkreislauf bzw. für die anlageninterne Kreislaufführung (fünfte Funktion); Entleerung (Drain) einer Vielzahl von Zellen, insbesondere zwecks Wartung oder Austausch (sechste Funktion). Die hier gewählte Reihenfolge der Funktionen hat dabei keine Bedeutung; da alles Funktionen integral realisiert werden können, bezieht sich diese Reihenfolge weder auf eine prozessuale Hierarchie oder auf eine Sequenz von Verfahrensschritten.

Je nach Anlagenkonzept kann der MFH ein Behälter sein, welcher nicht unter die Druckbehälter-Verordnung fällt. Anders ausgedrückt: Die Elektrolyseanlage kann wahlweise bei Drücke im Bereich von max. einigen Hundert Millibar [mbar] betrieben werden, so dass der MFH nicht als Druckbehälter ausgelegt sein muss.

Erfindungsgemäß können alle Funktionen, insbesondere zumindest die Funktionen Ableiten, Sammeln, Puffern, Phasentrennen, vollständig in den MFH integriert sein, ohne dass weitere Behälter oder Anlagenkomponenten für diese Funktionen bereitgestellt werden müssen. Je nach Anlagenkonzept können auch die Funktionen Pumpenvorlage und Drain vollständig integral vom MFH bereitgestellt werden. Bei letzterer Ausgestaltung kann insbesondere ein separater Sammel-/Entleerungstank entfallen. Bisher üblicherweise vorgesehene separate Sammel-/Entleerungstanks werden bisher nur selten genutzt, allenfalls einige Male pro Jahr, und nehmen vergleichsweise viel Platz/Raum ein, und generieren zudem auch beträchtliche Zusatzkosten.

Erfindungsgemäß ist die Elektrolysevorrichtung ferner eingerichtet zum integralen Bereitstellen auch der in den MFH integrierten Funktion Phasentrennen (weitere, insbesondere zweite Funktion) mittels des MFH, insbesondere an der jeweiligen Seite. Hierdurch lässt sich auch verfahrenstechnische Flexibilität erzielen.

Erfindungsgemäß ist der MFH ferner eingerichtet zum integralen Bereitstellen der Funktion Puffern des Elektrolyten während einer vordefinierbaren Mindestverweilzeit (insbesondere auch hinsichtlich Volumenschwankungen aufgrund von Phasenänderungen oder Schaumbildung) und der Funktion Zwischenlagern des Elektrolyten mit einem vordefinierbaren Mindestvolumen oder Mindest-Füllstand zum Bereithalten eines Mindestvolumens als Pumpenvorlage. Dies ermöglicht auch einen schlanken konstruktiven Aufbau und eine zweckdienliche verfahrenstechnische Verschaltung.

Gemäß einem Ausführungsbeispiel ist die Elektrolysevorrichtung ferner eingerichtet zum integralen Bereitstellen auch der in den MFH integrierten Funktion Entleerung der Zellen (Drain) mittels des MFH, insbesondere zu Wartungszwecken. Hierdurch lassen sich auch Platzbedarf und vorrichtungstechnischer Aufwand einsparen.

Erfindungsgemäß ist der MFH an das Pumpsystem gekoppelt. Dies ermöglicht auch eine zweckdienliche verfahrenstechnische Verschaltung.

Gemäß einem Ausführungsbeispiel ist der (jeweilige) MFH unterhalb des Elektrolyseurs angeordnet, insbesondere jeweils an der jeweiligen Seite. Dies liefert neben anlagentechnischen Vorteilen auch einen kompakten Aufbau. Eine gravitationsgetriebene Ab- bzw. Weiterleitung des Elektrolyten kann dadurch erleichtert sein. Das Ab- und Weiterleiten des Elektrolyten kann auf "frei ablaufende Weise" durchgeführt werden.

Gemäß einem Ausführungsbeispiel ist der (jeweilige) MFH zumindest annähernd zentrisch in Bezug auf den Elektrolyseur angeordnet. Dies ermöglicht auch eine kompakte Anordnung. Eine zentrische, insbesondere leicht versetzte Anordnung von insbesondere zwei MFH liefert dabei auch Vorteile hinsichtlich Einsparung von Bauraum und Armaturen.

Gemäß einem Ausführungsbeispiel ist der (jeweilige) MFH in einer Höhenposition unabhängig von der üblichen Höhenposition eines Anolyt- oder Katholytbehälters angeordnet, insbesondere jeweils an der jeweiligen Seite. Die Funktionsintegration ermöglicht eine Entkopplung von weiteren Komponenten. Ein separater Sammelbehälter ist nicht mehr erforderlich, und daher muss der MFH auch nicht notwendigerweise höher als ein Anolyt- oder Katholytbehälter oder ein Drain-Tank angeordnet werden. Hierdurch ergibt sich auch ein größerer konstruktiver Freiraum. Gemäß einem Ausführungsbeispiel ist der (jeweilige) MFH in einer niedrigeren Höhenposition relativ zu den Zellen angeordnet, insbesondere an der jeweiligen Seite. Dies ermöglicht auch einen rein gravitationskraftbetriebenen Fluss, zumindest bezüglich einzelner der Funktionen.

Gemäß einem Ausführungsbeispiel ist der (jeweilige) MFH auf dessen Rückseite mit den weiteren Anlagenkomponenten des Systems verrohrt. Dies liefert auch eine vorrichtungstechnisch vorteilhafte Integration, insbesondere hinsichtlich der relativen Ausrichtung bzw. Positionierung des MFH.

Gemäß einem Ausführungsbeispiel weist der (jeweilige) MFH ein Volumen von mindestens 15 % des Gesamtvolumens der Elektrolysehalbzellen auf, insbesondere in Bezug auf ein Zellen- oder Gerüstvolumen aller an den MFH gekoppelten (Halb-)Zellen im Bereich von 10 bis 60 Kubikmeter [m³] Gesamtvolumen. Gemäß einem Ausführungsbeispiel weist der MFH ein prozentuales Volumen in Bezug auf das Volumen der an den MFH gekoppelten (Halb-)Zellen im Bereich von 30 bis 150 Prozent auf. Dies liefert jeweils prozesstechnische Flexibilität und kann die Funktionalität erweitern. Dies liefert jeweils auch eine gute Puffer-Fähigkeit.

Gemäß einem Ausführungsbeispiel weist der (jeweilige) MFH ein Länge-Breiten-Verhältnis im Bereich von 10 bis 75 auf. Dies hat nicht zuletzt auch konstruktive Vorteile und begünstigt auch die Funktionsintegration.

Gemäß einem Ausführungsbeispiel weist der (jeweilige) MFH eine zylindrische Geometrie oder eine Geometrie zum Bereitstellen eines zumindest teilzylindrischen Puffervolumens für den Elektrolyt auf. Dies ermöglicht neben anlagentechnischen Vorteilen (insbesondere Bauraum) auch eine Optimierung hinsichtlich des Stofftransports und eine Optimierung der relativen Anordnung der Komponenten zueinander.

Gemäß einem Ausführungsbeispiel weist der (jeweilige) MFH einen Durchmesser im Bereich von 450 bis 1.000 mm auf, insbesondere im Bereich von 500 bis 800 mm.

Gemäß einem Ausführungsbeispiel weist der (jeweilige) MFH einen maximalen Durchmesser im Bereich von 800 bis 1.000 mm auf, insbesondere bei zylindrischer Querschnittsgeometrie. Dies ermöglicht auch jeweils eine vorteilhafte anlagentechnische Integration. Ein vergleichsweise großer Durchmesser des erfindungsgemäßen MFH ermöglicht auch eine große Verweilzeit, wodurch die Phasentrennung begünstigt werden kann (umfangreiche funktionale Integration der Phasentrennung).

Gemäß einem Ausführungsbeispiel weist der (jeweilige) MFH eine in Abhängigkeit der Anzahl der Zellen definierte Länge auf, insbesondere im Bereich von 10 bis 15 m (Meter) bei 150 Zellen, oder im Bereich von 20 bis 30 m (Meter) bei bis zu 300 Zellen. Die Längendefinition als Funktion der Zellenanzahl ermöglicht eine zweckdienliche Auslegung und Funktionenintegration und kann nicht zuletzt auch eine beträchtliche freie Weglänge für Elektrolyt bereitstellen, was prozesstechnische Vorteile bietet.

Gemäß einem Ausführungsbeispiel weist der (jeweilige) MFH einen Elektrolyt-Füllstand von mindestens 100 mm auf, insbesondere in Bezug auf ein Zellen- oder Gerüstvolumen im Bereich von 10 bis 60 m³ (Kubikmeter). Dies kann auch eine hohe verfahrenstechnische Flexibilität sicherstellen, insbesondere in Hinblick auf eine zeitliche Überlagerung mehrerer Funktionen bzw. in Hinblick auf Füllstands-Schwankungen.

Gemäß einem Ausführungsbeispiel ist der (jeweilige) MFH eingerichtet bzw. ausgelegt für Fließgeschwindigkeiten des Elektrolyten bis maximal 0,2 m/s. Dies ermöglicht auch eine besonders umfangreiche Funktionsintegration.

Die Länge des MFH kann dabei auch in Abhängigkeit von der Anzahl der Single Elements eingestellt bzw. gewählt werden. Es hat sich gezeigt, dass eine zusätzliche Länge von ca. 2 m vorteilhaft sein kann in Hinblick auf Instrumentierung und Armaturen. Die je Anwendungsfall zweckdienliche Länge kann aus einem breiten Bereich gewählt werden, beispielsweise zwischen 5 und 30 m.

Gemäß einem Ausführungsbeispiel weist der MFH wenigstens eine integrierte Messsensorik auf, insbesondere wenigstens einen Füllstandssensor für Elektrolyt und/oder wenigstens einen Temperatursensor. Hierdurch lässt sich der jeweilige Prozess leichter regeln. Je nach Prozess-Stadium kann eine Überwachung des MFH auf einfache Weise wichtige Erkenntnisse liefern.

Eine Füllstands-Überwachung und -regelung liefert in Kombination mit einem möglichst großen Volumen die Möglichkeit, den MFH auf einfache und betriebssichere Weise auch als Pumpenvorlage zu nutzen. Ferner können eine Stickstoffeinleitung und Sicherheitseinrichtungen (so genannte XV und Level Switches) vorgesehen sein. Es hat sich gezeigt, dass dank der Füllstandsregelung eine umfangreiche Funktionsintegration auf einfache Weise möglich ist. Im Gegensatz dazu erfolgte bisher in üblicherweise verwendeten Ablaufleitungen keine Füllstandsregelung (lediglich ungeregelter, freier Ablauf).

Gemäß einem Ausführungsbeispiel weist der MFH wenigstens ein ortsfestes Strömungspfadhindernis, insbesondere Wehr, im Bereich des aufzunehmenden Elektrolyt oder des für Elektrolyt vorgesehenen Puffervolumens auf. Hierdurch kann der Strömungspfad bzw. die Strömungsgeschwindigkeit beeinflusst werden. Beispielsweise sind in einer unteren Hälfte des MFH Platten oder Leitbleche angeordnet. Das Strömungspfadhindernis kann auch als Einbau-Bauteil zur Optimierung von Phasentrennungs-Vorgängen beschrieben werden.

Gemäß einem Ausführungsbeispiel ist der (jeweilige) MFH eingerichtet für eine Verweildauer des Elektrolyten (bzw. des Zweiphasengemisches bzw. der beiden Phasen) im Bereich von 2 bis 5 Minuten. Hierdurch kann insbesondere auch die Funktion Phasentrennung auf effektive Weise integriert werden.

Gemäß einem Ausführungsbeispiel ist der (jeweilige) MFH eingerichtet für eine Fließgeschwindigkeit des Elektrolyten (bzw. des Zweiphasengemisches bzw. der beiden Phasen) im Bereich von 0,01 bis 0,2 m/s (Meter pro Sekunde). Dies ermöglicht auch eine effektive Phasentrennung integriert im MFH.

Gemäß einem Ausführungsbeispiel ist der MFH eingerichtet für eine Mindestverweildauer des zu sammelnden Elektrolyt (bzw. Zweiphasengemisches), insbesondere eingerichtet zum Sammeln des Elektrolyten (bzw. des Zweiphasengemisches) durch Verringern von dessen Durchflussgeschwindigkeit, insbesondere auf die Durchflussgeschwindigkeit Null während der Mindestverweildauer. Hierdurch kann auch eine umfassende Funktionsintegration sichergestellt werden.

Gemäß einem Ausführungsbeispiel weist die Elektrolysevorrichtung zwei an die Zellen koppelbare/gekoppelte MFH auf, nämlich an der jeweiligen Seite des Elektrolyseurs für Anolyt und Katholyt, wobei die MFH insbesondere seitlich versetzt zueinander angeordnet sind, insbesondere zumindest annähernd mittig in Bezug auf den Elektrolyseur. Diese Anordnung liefert vorrichtungs- und verfahrenstechnische Vorteile bei möglichst umfassender Funktionsintegration.

Gemäß einem Ausführungsbeispiel weist die Elektrolysevorrichtung zwei an die Zellen koppelbare/gekoppelte MFH auf, welche über eine Pendelleitung miteinander verbunden sind und/oder welche mittels einer füllstandsabhängigen Durchflussregelung und/oder Nebenstromregelung (geregelter Nebenstrom) aneinander gekoppelt sind. Dies liefert auch Flexibilität hinsichtlich unterschiedlicher Betriebsweisen der Elektrolysevorrichtung (insbesondere "Kreuzbetrieb" oder "Parallelbetrieb").

Die zuvor genannte Aufgabe wird erfindungsgemäß auch gelöst durch ein Verfahren nach Anspruch 1. Hierdurch ergeben sich zuvor genannte Vorteile.

Erfindungsgemäß wird auch die Funktion Phasentrennen integral zusammen mit den Funktionen Ableiten und Sammeln im integralen MFH ausgeführt, mittels eines füllstandsgeregelten und auch als Pumpenvorlage genutzten MFH. Hierdurch kann ein großer Umfang der möglichen Funktionsintegrationen genutzt werden.

Gemäß einer Ausführungsform erfolgt stromab vom Sammeln bzw. Zwischenlagern ein Pumpen des Elektrolyten mittels des Pumpsystems (insbesondere in einer Kreislaufführung), insbesondere ein Rückführen zu den Zellen.

Dies liefert eine umfangreiche funktionale Integration bzw. Verschmelzung.

Erfindungsgemäß umfasst das Sammeln auch die beiden folgenden Unterfunktionen: Puffern des Elektrolyten während einer vordefinierbaren Mindestverweilzeit, insbesondere zur Phasentrennung, und Zwischenlagern des Elektrolyten mit einem vordefinierbaren Mindestvolumen oder Mindest-Füllstand zum Bereithalten eines Mindestvolumens als Pumpenvorlage. Dies liefert eine breite Funktionalität in einem integralen Verfahrensschritt bzw. mittels eines multifunktionalen Sammelbehälters. Diese breite Funktionalität hat insbesondere auch Vorteile in Hinblick auf die durch Schaumbildung hervorgerufenen Volumenveränderungen. Gemäß einer Ausführungsform wird eine Verweildauer zur Phasentrennung des Elektrolyten (bzw. des Zweiphasengemisches bzw. der beiden Phasen) im Bereich von 2 bis 50 Minuten eingehalten, insbesondere im MFH.

Gemäß einer Ausführungsform wird zur Phasentrennung eine Fließgeschwindigkeit des Elektrolyten (bzw. des Zweiphasengemisches bzw. der beiden Phasen) im Bereich von 0,01 bis 0,2 Meter pro Sekunde [m/s] eingehalten, insbesondere im MFH. Hierdurch kann jeweils auch die Funktionsintegration erweitert werden.

Gemäß einer Ausführungsform umfasst das Sammeln ein Puffern des Elektrolyten in Hinblick auf Volumenschwankungen im Bereich von 5 bis 30 Prozent des Gesamtvolumens von Elektrolyt. Gemäß einer Ausführungsform umfasst das Sammeln ein Bereithalten eines Mindestvolumens von Elektrolyt als Pumpenvorlage für einen internen Pumpkreislauf. Dies kann jeweils die Funktionsintegration erweitern.

Gemäß einer Ausführungsform wird Wasserstoff durch Wasserelektrolyse bereitgestellt, insbesondere mittels einer Elektrolysevorrichtung im Leistungsbereich von 5 bis 20 MW. Es hat sich gezeigt, dass das erfindungsgemäße Verfahren bzw. die erfindungsgemäße Vorrichtung bei der Wasserelektrolyse deutliche Vorteile liefern kann, insbesondere im erwähnten Leistungsbereich. Das Leistungsvermögen (bzw. die Produktions-Kapazität) der Elektrolysevorrichtung kann auch durch Bezugnahme auf einen Volumenstrom [NormKubikmeter pro Stunde] erfolgen. Die Elektrolysevorrichtung weist bevorzugt ein Leistungsvermögen im Bereich von 1.000 bis 4.500 Nm3/h [Nm³/h] auf (Wasserstoff-Produktionsrate).

Gemäß einer Ausführungsform wird der gesamte Elektrolyt, der aus dem (jeweiligen) MFH herausgefördert wird, in seiner Gesamtheit wieder in den entsprechenden MFH zurückgeführt (vollumfängliche Rückführung). Bei dieser Betriebsweise kann der MFH als Komponente des Kreislaufs genutzt werden.

Gemäß einer Ausführungsform wird das funktionsintegrale Verfahren in separater oder in kombinierter Betriebsweise betrieben, insbesondere in kombinierter Betriebsweise mit Pendelleitung (und/oder einer Leitung mit vergleichbarer Funktion zum geregelten Volumenausgleich) zwischen einem anolytseitigen MFH und einem katholytseitigen MFH. Dies kann die Flexibilität weiter erhöhen.

Wie erwähnt, können mehrere MFH miteinander verbunden sein, insbesondere ein MFH für Anolyt verbunden mit einem MFH für Katholyt. Volumenschwankungen, die beispielsweise bei nicht exakt gleichen Volumenströmen auftreten mögen, können durch die bereits erwähnte Pendelleitung (kommunizierende Röhren) und/oder durch jeweils einen Pumpenbypass der beiden Elektrolytpumpen kompensiert werden, so dass ein Teilstrom aus einem ersten MFH von der Pumpendruckseite zurück auf die Pumpensaugseite gefördert werden kann. Der effektive Volumenstrom kann dadurch gesenkt werden. Bei steigendem Füllstand im ersten MFH kann der entsprechende Pumpenbypass geöffnet werden. Steigt hingegen der Füllstand im zweiten MFH, kann der andere (zweite) Bypass geöffnet werden. Bei dieser Betriebsweise können also die Füllstands-Messdaten von wenigstens zwei Füllstandssensoren in wenigstens zwei MFH analysiert und als Steuerungs-/Regelungsgrundlage verwendet werden.

Zur umfassenderen Erläuterung der vorliegenden Erfindung wird im Folgenden speziell ein Wasserelektrolysemodul insbesondere der 5 MW-Klasse beschrieben. Dabei wird der Begriff "Header" synonym zum Begriff "MFH" verwendet und mit "MFH" abgekürzt, sofern nicht anders gekennzeichnet.

Die zuvor genannte Aufgabe wird erfindungsgemäß auch gelöst durch ein zuvor beschriebenes Verfahren, wobei eine Füllstandsregelung erfolgt, indem im jeweiligen MFH eine Füllstandsmessung vorgenommen wird und der aktuelle IST-Füllstand mit einem SOLL-Füllstand oder mit einem unteren und/oder oberen Schwellwert für den Füllstand verglichen wird, insbesondere zwecks Zuführung oder Ableitung von Medium zum Einstellen eines Füllstandes in einem gewünschten/vordefinierten Füllstandsbereich. Die Füllstandsregelung umfasst dabei bevorzugt jeweils eine Füllstandsmessung des Anolyt- bzw. Katholyt-MFH. Über den Füllstand wird das Volumen (Elektrolyt-Menge) innerhalb des jeweiligen MFH sowie das Gesamtvolumen (Elektrolyt-Menge) in der Elektrolysevorrichtung bestimmt. Beispielsweise kann in Abhängigkeit des Gesamtvolumens auch die Zufuhr von Wasser (insbesondere demineralisiertes Wasser) geregelt werden. Über die jeweiligen gemessenen (IST-)Füllstände können dabei auch Volumenschwankungen zwischen den beiden MFH über eine Ausgleichsleitung (Pendelleitung) geregelt oder vermieden werden, insbesondere ohne dass ein Schalten oder Ventil-Betätigungen erforderlich sind.

Im Folgenden wird eine beispielhafte Anlagenkonfiguration beschrieben.

Ein Wasserelektrolysemodul (Elektrolysevorrichtung), insbesondere der 5 MW-Klasse, dient der Gewinnung von Wasserstoff und Sauerstoff durch Wasserelektrolyse in Kalilauge. Das Modul besteht aus einem Zellensaal mit Elektrolyseur und Elektrolytsystem, Transformator/Gleichrichter, sowie einer Wasserstoffbehandlung und einer Sauerstoffbehandlung, ergänzt durch ein Kühlwassersystem.

Demineralisiertes Wasser wird im Elektrolytsystem in den Prozess gespeist und in den Zellen des Elektrolyseurs elektrochemisch in Wasserstoff und Sauerstoff gespalten. Der entstandene Wasserstoff wird anschließend in der Wasserstoffbehandlung gekühlt, gefiltert und an eine interne Anlagengrenze abgegeben. Der produzierte Sauerstoff wird in der Sauerstoffbehandlung ebenfalls gekühlt und gefiltert.

Als Führungsgröße der Wasserelektrolyse kann die Stromlast des Elektrolyseurs bzw. die Wasserstoff-Produktionsrate dienen. Der Volumenstrom von demineralisiertem Wasser ist abhängig von der Produktionsrate der Wasserelektrolyse und kann über die Stromlast geregelt werden. Dabei kann das Gesamtvolumen des Elektrolytsystems über zwei Füllstandsmessungen gemessen und als Regelgröße zur Feinregelung verwendet werden. Der Wasserstoff kann als führende Produktkomponente auf einen Überdruck von einigen Hundert Millibar [mbar g] geregelt werden. Der Sauerstoffdruck folgt dieser Regelung mit einem Differenzdruck von einigen Millibar. Der Wasserstoff verlässt die interne Anlagengrenze zur Wasserstoffkompression mit einem Überdruck. Der Elektrolyt wird mit konstantem Volumenstrom über mehrere Pumpen im Kreis geführt. Da es in den Zellen durch die elektrochemische Reaktion zu einer Konzentrationsverschiebung innerhalb des Elektrolyten kommt, sind die Volumenströme von Anolyt und Katholyt unterschiedlich. Dieser Unterschied kann optional durch eine Pendelleitung ausgeglichen werden, welche Pendelleitung zwei MFH aneinander koppelt.

Die einzelnen Zellen des Elektrolyseurs können beispielsweise bipolar, d.h. in Reihe angeordnet werden und dafür in einen Stahlrahmen eingehängt und zur Sicherstellung des elektrischen Kontakts zusammengepresst werden. Jede Zelle besteht insbesondere aus einer Anoden- und Kathodenhalbschale aus Nickel, einem Separator, sowie einem Dichtungssystem, welches die Anoden- und Kathodenhalbschale voneinander sowie die Zelle nach außen abdichtet. Die Anoden- und Kathodenhalbschalen der Zelle werden dabei durch den Separator elektrisch isolierend und ionisch leitend voneinander getrennt. Die Zulauf- und Ablaufheader der Anoden-und Kathodenhalbschale befinden sich insbesondere jeweils seitlich bzw. unterhalb der Zellen.

Zum Ladungsausgleich migrieren positiv geladene Kalium-Ionen von der Anodenseite der Zelle durch den Separator zur Kathodenseite. Dabei werden auch Wassermoleküle zur Kathodenseite transportiert. Das auf der Anodenseite der Zellen entstehende Zweiphasengemisch aus Sauerstoff und Anolyt wird insbesondere über einen angeschlossenen Wellschlauch nach unten abgeführt und in einem Mehrfunktions-Anolyt-Headertank (MFH) des Elektrolyseurs aus den bzw. aus allen Zellen gesammelt. Im Freispiegelvolumen des MFH mit integrierter Vorlagefunktion kann die Trennung des gebildeten Sauerstoffs aus dem Anolyt erfolgen. Der Sauerstoff kann nach oben zu einem Sauerstoffkühler geführt werden, während der sauerstoffgesättigte Anolyt über die Anolytpumpe wieder dem Elektrolytkreislauf zugeführt werden kann. Der MFH kann dabei die Funktion einer Pumpenvorlage sicherstellen.

An der Kathodenseite der Zellen entsteht wiederum ein Zweiphasengemisch aus Katholyt und Wasserstoff, welches analog zum Anolyt zu einem Mehrfunktions-Katholyt-Headertank (MFH) abgeführt werden kann, insbesondere über einen Wellschlauch. Dort kann der Wasserstoff aus dem Katholyt separiert werden. Der Wasserstoff kann nach oben zum Wasserstoffkühler geleitet werden. Der wasserstoffgesättigte Katholyt kann über die Katholytpumpe dem Elektrolytkreislauf zugeführt werden. Der entsprechende MFH kann dabei die Funktion einer Pumpenvorlage sicherstellen.

Ein konstanter Differenzdruck zwischen Kathoden- und Anodenraum ist vorteilhaft für einen sicheren Betrieb der Zellen. Der Wasserstoffdruck kann insbesondere einige Millibar höher als der Sauerstoffdruck eingestellt werden.

Zur Betriebsweise: Anolyt und Katholyt aus den Zellen können insbesondere in einem gemeinsamen Elektrolytsystem über Kreuz geführt werden. Anolyt aus den Anodenhalbschalen des Elektrolyseurs kann im Anolyt-MFH gesammelt werden. Von dort kann der Anolyt über eine Anolytpumpe zum Katholyt-Zulaufheader des Elektrolyseurs gepumpt werden. Da bei der Wasserelektrolyse kontinuierlich Wasser verbraucht wird, kann demineralisiertes Wasser auf der Saugseite der Anolytpumpe eingespeist werden. Die Menge der Einspeisung kann über die Stromlast des Elektrolyseurs und dem Füllstand des Elektrolyten geregelt werden. Analog kann Katholyt aus Kathodenhalbschalen im Katholyt-MFH gesammelt werden. Von dort kann der Katholyt durch die Katholytpumpe zur Temperierung über den Katholytkühler zum Anolyt-Zulaufheader des Elektrolyseurs geführt werden.

Für optimierten Betrieb können die Zellen des Elektrolyseurs bei einer spezifizierten Temperatur betrieben werden, welche abhängig von der Stromlast des Elektrolyseurs eingestellt werden kann. Im Normalbetrieb kann das Elektrolytsystem temperaturgeregelt mittels eines Katholytkühlers gekühlt werden. Zur Entleerung des Elektrolytsystems (z.B. zu Wartungszwecken) kann der Elektrolyt in den Anolyt- und Katholyt-MFH aufgenommen werden (optionale Drain-Funktion).

Der Sauerstoff aus dem Anolyt-MFH kann im Sauerstoffkühler mit Kühlwasser gekühlt werden. Das hierbei entstehende alkalische Kondensat kann dem Elektrolytsystem zugeführt werden. Der Sauerstoff kann nach der Kühlung in einem Sauerstofffilter gefiltert werden, insbesondere um etwaige alkalische Aerosole zu entfernen, und kann über Dach (nach oben) abgegeben werden. Um ein Verblocken des Sauerstofffilters durch Hydroxide zu vermeiden, kann der Filter mit demineralisiertem Wasser gewaschen werden. Das Kondensat aus dem Sauerstofffilter kann ebenfalls zurückgeführt werden.

Der Wasserstoff aus dem Katholyt-MFH kann im Wasserstoffkühler mit Kühlwasser gekühlt und anschließend im Wasserstoffnachkühler mit einem Wasser/Glykol-Gemisch aus der CO2-Verdampfung der Methanolsynthese nachgekühlt werden. Das bei der Kühlung entstehende alkalische Kondensat kann dem Elektrolytsystem zugeführt werden. Der Wasserstoff kann anschließend in einem Wasserstofffilter gefiltert werden, insbesondere um mitgeführte alkalische Aerosole zu entfernen, und kann anschließend zur Methanolsynthese geleitet werden. Um ein Verblocken des Wasserstofffilters durch Hydroxide zu vermeiden, kann der Filter mit demineralisiertem Wasser gewaschen werden. Bei Bedarf kann der Wasserstoff über einen Wasserstoffkamin abgegeben werden. Der Kamin ist bevorzugt mit einer Flammenrückschlagsicherung versehen, welche im Falle einer Wasserstoffentzündung im Kamin ein Zurückschlagen der Flamme in das Gassystem verhindern kann.

Zur gemeinsamen Versorgung von Katholytkühler, Sauerstoffkühler und Wasserstoffkühler kann Kühlwasser über einen Kühlwasserrückkühler zirkuliert und gegen Luft gekühlt werden. Dabei können die Kühler über die jeweilige Prozesstemperatur geregelt werden. Der Wasserstoffnachkühler kann über einen separaten Wasser/Glykolkreislauf aus der Methanolsynthese gekühlt werden.

Zur umfassenderen Erläuterung der vorliegenden Erfindung wird nachfolgend speziell ein weiteres Wasserelektrolysemodul beschrieben.

Im Folgenden wird eine weitere beispielhafte Anlagenkonfiguration beschrieben.

Die im Folgenden beschriebene Anlage (Elektrolysevorrichtung) zur Gewinnung von Wasserstoff durch Wasserelektrolyse besteht aus einem Zellensaal mit Elektrolyseur, dazugehörigem Transformator/Gleichrichter, einem Elektrolytsystem bestehend aus einem Anolytsystem und einem Katholytsystem, sowie einer Wasserstoffaufbereitung und einer Sauerstoffaufbereitung. Demineralisiertes Wasser wird in den beiden Elektrolytsystemen in den Prozess gespeist und in den Zellen des Elektrolyseurs elektrochemisch in Wasserstoff und Sauerstoff gespalten. Der entstandene Wasserstoff wird anschließend über die Wasserstoffaufbereitung gekühlt, gefiltert und über einen Kamin an die Atmosphäre abgegeben. Flansche und Absperrungen zur Analyse sowie optional zur weiteren Verarbeitung des Wasserstoffs können ebenfalls vorgesehen sein. Der produzierte Sauerstoff wird in der Sauerstoffaufbereitung gekühlt, gefiltert und ebenfalls über einen Kamin an die Atmosphäre abgegeben.

Als Führungsgröße der Wasserelektrolyse kann die Stromlast des Elektrolyseurs bzw. die Produktionsrate an Wasserstoff dienen. Über die Stromlast wird der notwendige Volumenstrom des eingespeisten demineralisierten Wassers geregelt. Die Volumenströme zum Elektrolyseur sind je nach Betriebsweise abhängig von der Stromlast bzw. vom Flüssigkeitsstand der Elektrolytbehälter durchflussgeregelt. Die Anolyt-/Katholytpumpen sind abhängig vom Druck vor den Elektrolytzulaufheadern geregelt. Der Sauerstoff kann als führende Produktkomponente auf einen Überdruck von mehreren Hundert Millibar geregelt werden. Der Wasserstoffdruck folgt diesem mit einem Differenzdruck von einigen Millibar.

Der Elektrolyseur dient der Produktion von gasförmigen Wasserstoff und Sauerstoff durch Wasserelektrolyse in Natronlauge (optional: Kalilauge). Der Elektrolyseur besteht aus mehreren Zellen, die bipolar, d.h. in Reihe, angeordnet werden und dafür z.B. in einen Stahlrahmen eingehängt und zusammengepresst werden/sind. Jede Zelle besteht aus einer Anoden- und Kathodenhalbschale aus Nickel, einer kationenselektiven Membran sowie einem Dichtungssystem, welches die Anoden- und Kathodenseite voneinander sowie die Zelle nach außen abdichtet. Die Anoden- und Kathodenseite der Zelle werden dabei durch die Membran elektrisch isolierend und ionisch leitend voneinander getrennt. Die Zufuhr- und Ablaufleitungen der Anoden- und Kathodenseite befinden sich jeweils seitlich bzw. unterhalb der Zellen. Die Anoden- und Kathodenzuläufe beinhalten je nach Betriebsweise beispielsweise etwa 10-20 gewichtsprozentige Lauge. Die austretenden Phasengemische aus Anolyt und Sauerstoff bzw. Katholyt und Wasserstoff werden ebenfalls nach unten in einen Anolyt- bzw. Katholyt-Zellenheader MFH abgeführt.

In den Einzelelementen bzw. Zellen entstehen auf der Anodenseite Sauerstoff und Wasser durch elektrochemische Oxidation der Hydroxidionen der Lauge. Auf der Kathodenseite entstehen durch elektrochemische Reduktion des Wassers Wasserstoff und Hydroxidionen. In der Gesamtnettoreaktion wird damit pro erzeugtes Wasserstoffmolekül ein Molekül Wasser verbraucht. Zum Ladungsausgleich migrieren positiv geladene Natrium- (bzw. Kalium-Ionen) von der Anodenseite der Zelle durch die Membran zur Kathodenseite. Dabei werden auch Wassermoleküle durch die Membran zur Kathodenseite transportiert. Dabei nimmt der pH-Wert im Anolyt ab, und im Katholyt nimmt der pH-Wert zu. Gleichzeitig ändern sich die Volumenströme beider Elektrolyte in Abhängigkeit vom Wasserverbrauch sowie der beteiligten Transportprozesse.

Die Zellen des Elektrolyseurs werden aus dem Anolyt- sowie dem Katholytsystem über die Anodenzulauf- und Kathodenzulaufheader je nach Betriebsweise mit temperierter Lauge versorgt. Der Volumenstrom kann dabei über Durchflussmesser und Durchflussregelventile geregelt werden, welche bei Unterversorgung den Elektrolyseur abschalten. Ein insbesondere über vergleichsweise lange, dünne Schläuche einstellbarer Druckabfall sorgt dabei für eine gleichmäßige Verteilung des Anoden- und Kathodenzulauf-Volumenstroms zu den einzelnen Zellen.

Das auf der Anodenseite der Zellen entstehende Zweiphasengemisch aus Sauerstoff und alkalischem Anolyt wird über einen angeschlossenen Wellschlauch nach unten abgeführt und im Anolyt-Zellenheader MFH des Elektrolyseurs aus allen Zellen gesammelt. In diesem Freispiegel-Sammelbehälter kann die Trennung des gebildeten Sauerstoffs vom Anolyt erfolgen. Der Sauerstoff wird nach oben zur Sauerstoffkühlung geführt (Gas-Auslass), während der sauerstoffgesättigte Anolyt nach unten zum Anolytbehälter abfließt (Flüssig-Auslass).

An der Kathodenseite der Zellen entsteht wiederum ein Zweiphasengemisch aus Katholyt und Wasserstoff, welches analog zum Anolyt über einen Wellschlauch zum Katholyt-Zellenheader abgeführt wird. Dort trennt sich ebenfalls der Wasserstoff vom Katholyt und wird nach oben zum Wasserstoffkühler geleitet, während der wasserstoffgesättigte Katholyt zum Katholytbehälter MFH abfließt und dort gesammelt wird.

Ein konstanter, positiver Differenzdruck zwischen Kathoden- und Anodenraum ist für einen sicheren Betrieb der Zellen vorteilhaft. Der Wasserstoffdruck wird bevorzugt einige Millibar höher als der Sauerstoffdruck eingestellt. Falls der Sauerstoffdruck, Wasserstoffdruck oder der Differenzdruck entsprechende Grenzen über- bzw. unterschreitet, können Sicherheitsmechanismen aktiviert werden (insbesondere Verriegelungen, Überdruckregelungen am Elektrolyseur), die eine Einhaltung der maximalen zulässigen Betriebsdrücke sicherstellen können. Beispielhaft seien genannt: Abschaltung des Elektrolyseurs, Lastabsenkung des Elektrolyseurs, Absicherung des Elektrolyseurs gegen zu hohen/tiefen Differenzdruck, Druckabsicherung Anolyt- und Katholyt-Zellenheader des Elektrolyseurs, Rückströmsicherung Wasserstoff und Sauerstoff zum Stickstoffsystem, Überdruckabsicherung Wasserstoffsystem, Unterdruckabsicherung Wasserstoffsystem, und/oder Druckabsicherung Stickstoff zum Zellensaal.

Der Katholyt aus dem Katholyt-Zellenheader der Zellen fließt in den Katholytbehälter. Der Anolyt aus dem Anolyt-Zellenheader der Zellen fließt in den Anolytbehälter. Um den Elektrolyseur nach Abstellung entleeren zu können, können die MFH optional entsprechend dimensioniert werden, um im Bedarfsfall die gesamte Flüssigkeitsmenge des Systems aufnehmen zu können. Erfindungsgemäß hat sich gezeigt, dass durch die Funktionsintegration die MFH ohnehin bereits ein beträchtliches Volumen aufweisen und eine zusätzliche Integration der Drain-Funktion keinen sonderlich hohen Mehraufwand begründet. Aus dem bzw. den MFH werden Anolyt und Katholyt über die Anolyt-/Katholytpumpen druckgeregelt zur Temperaturregelung über den Anolytwärmetauscher bzw. den Katholytwärmetauscher zum Elektrolyseur gepumpt. Die Anolyt-/Katholytpumpen haben bevorzugt eine gemeinsame Standby-Pumpe. Von den Wärmetauschern können die Elektrolyte in einem verschränkten Kreislauf ("Kreuzbetrieb") oder alternativ in zwei voneinander getrennten Anolyt- und Katholytkreisläufen ("Parallelbetrieb") zu den Einlaufheadern des Elektrolyseurs gefahren werden. Im Kreuzbetrieb wird der Anolyt aus dem Anolytbehälter durch die Anolytpumpe über den Anolytwärmetauscher als Kathodenzulauf zum Kathodenzulaufheader des Elektrolyseurs geleitet. Entsprechend wird der Katholyt aus dem Katholytbehälter durch die Katholytpumpe über den Katholytwärmetauscher als Anodenzulauf zum Anodenzulaufheader des Elektrolyseurs geleitet. Im Parallelbetrieb wird der Anolyt aus dem Anolytbehälter durch die Anolytpumpe über den Anolytwärmetauscher als Anodenzulauf zum Anodenzulaufheader des Elektrolyseurs gepumpt. Analog wird der Katholyt aus dem Katholytbehälter durch die Katholytpumpe über den Katholytwärmetauscher als Kathodenzulauf zum Kathodenzulaufheader des Elektrolyseurs geleitet. Da es im Parallelbetrieb zu einer Akkumulierung von Lauge im Katholytsystem und einer Verarmung an Lauge im Anolytsystem kommen kann, werden Anolytbehälter und Katholytbehälter miteinander verbunden, um einen Flüssigkeitsausgleich zu ermöglichen. Dabei kann eine gasseitige Trennung von Wasserstoff und Sauerstoff sichergestellt werden. Da bei der Wasserelektrolyse kontinuierlich Wasser verbraucht wird, kann bei beiden Betriebsweisen demineralisiertes Wasser auf der Saugseite der Anolyt-/Katholytpumpen nachgespeist werden.

Mittels eines Durchflussreglers kann einerseits die Einspeisung von demineralisiertem Wasser in Abhängigkeit von der Stromlast sowie andererseits der Volumenstrom des Anoden- und Kathodenzulaufs des Elektrolyseurs so konstant wie möglich gehalten werden. Dabei dienen Anolyt- und Katholytbehälter MFH dazu, Schwankungen im Volumen der jeweiligen Elektrolyte aufgrund von z.B. Wassereinspeisung oder Elektrolyt- und Kondensatrückführung auszugleichen (integrierte Puffer-Funktion). Der Volumenstrom von Anolyt und Katholyt zum Elektrolyseur richtet sich hauptsächlich nach der Stromlast des Elektrolyseurs bzw. nach den benötigten Volumenströmen zum Befüllen oder Zirkulieren des Elektrolyseurs. Der Druck in den Anoden-und Kathodenzulaufheadern kann insbesondere über die Frequenz der Anolyt-/Katholytpumpen geregelt werden, um konstante Druckbedingungen in den Zuläufen sicherzustellen. Dafür vorgesehene Drucktransmitter können hinter den Anolyt-/Katholytwärmetauschern angeordnet sein. Im Falle eines spontanen Druckabfalls kann ein Interlock aktiviert werden, welcher eine Standby-Pumpe startet.

Im Kreuzbetrieb wird der Kathodenzulauf aus dem Anolytsystem zum Kathodenzulaufheader des Elektrolyseurs bevorzugt abhängig von der Stromlast des Elektrolyseurs durchflussgeregelt. Die dafür vorgesehene Durchflussregelung befindet sich vor dem Kathodenzulaufheader. Eine Füllstandsregelung des Katholytsammelbehälters MFH kann dabei den Volumenstrom des Anodenzulaufs definieren. Die Durchflussregelung ist vor dem Anodenzulaufheader angeordnet. Im Parallelbetrieb kann sowohl der Anodenzulauf zum Anodenzulaufheader als auch der Kathodenzulauf abhängig von der Stromlast durchflussgeregelt werden. Ein Überfüllungs- bzw. Pumpenschutz wird durch Füllstandmesser realisiert, welche auf die Anolyt-/Katholytpumpen wirken.

Die Einspeisung von demineralisiertem Wasser richtet sich nach dem Verbrauch in der Wasserelektrolyse und wird daher über die Stromlast des Elektrolyseurs geregelt. Die Einspeisung findet hauptsächlich im Kathodenzulauf statt. Im Kreuzbetrieb wird demineralisiertes Wasser durchflussgeregelt über die Saugseite der Anolytpumpe nachgespeist, und im Parallelbetrieb über die Saugseite der Katholytpumpe.

Für optimierten Betrieb können die Zellen des Elektrolyseurs bei einer spezifizierten Temperatur gefahren werden, welche von der Betriebsweise und der Stromlast des Elektrolyseurs abhängig eingestellt werden kann. Zum Anfahren der Anlage und bei Niedriglast erfolgt ein Aufheizen des Elektrolytsystems über Wärmetauscher. Im Normalbetrieb wird das Elektrolytsystem über diese Wärmetauscher gekühlt. Die Wärmetauscher verfügen jeweils über eine Temperaturregelung, deren Temperaturfühler sich jeweils stromab vom Wärmetauscher befinden. Die Temperatursollwerte richten sich nach dem Betriebsfenster des Elektrolyseurs. Die Wärmetauscher sind durch Überdruckventile vor Schäden durch thermische Expansion geschützt. Als Sicherheitsmechanismen seien beispielhaft genannt: Überfüllsicherung der Behälter, Trockenlaufschutz der Pumpen, Betrieb und Autostart der Pumpen, Neustart der Pumpen nach Stromausfall, und/oder Überhitzungsschutz Anolyt- und Katholytkreislauf.

Der Sauerstoff aus dem Anolyt-Zellenheader MFH wird in der Sauerstoffaufbereitung zusammengeführt und mit Kühlwasser im Sauerstoffkühler gekühlt. Das hierbei entstehende leicht alkalische Kondensat fließt zum MFH ab. Der Sauerstoff wird nach der Kühlung im Sauerstofffilter gefiltert, insbesondere um mitgeführte alkalische Aerosole zu entfernen und über den Sauerstoffkamin abgegeben. Um ein Verblocken des Sauerstofffilters durch Hydroxide zu vermeiden, wird der Filter regelmäßig mit demineralisiertem Wasser gewaschen. Als Sicherheitsmechanismen seien beispielhaft genannt: Sauerstoff Rückströmsicherung, Inertisierung Sauerstoffkamin, und/oder Absicherung Sauerstoff-Überdruck.

Der Wasserstoff aus dem Katholyt-Zellenheader MFH wird in der Wasserstoffaufbereitung zusammengeführt und mit Kühlwasser im Wasserstoffkühler gekühlt. Das hierbei entstehende leicht alkalische Kondensat wird zum MFH zurückgeführt. Der Wasserstoff wird nach der Kühlung im Wasserstofffilter gefiltert, insbesondere um mitgeführte alkalische Aerosole zu entfernen, und wird über den Wasserstoffkamin abgegeben. Um ein Verblocken des Wasserstofffilters durch Hydroxide zu vermeiden, wird der Filter regelmäßig mit demineralisiertem Wasser gewaschen. Als Sicherheitsmechanismen seien beispielhaft genannt: Wasserstoff Rückströmsicherung, Inertisierung Wasserstoffkamin, Flammenlöschung mittels Dampf, und/oder Überdruckabsicherung.

Im Folgenden werden die zuvor beschriebenen Konfigurationen am Beispiel einer konkreten Ausgestaltung nochmals erläutert.

### FIGURENBESCHREIBUNG

Weitere Merkmale und Vorteile der Erfindung ergeben sich aus der Beschreibung wenigstens eines Ausführungsbeispiels anhand von Zeichnungen, sowie aus den Zeichnungen selbst. Dabei zeigt
- Fig. 1: in einer Seitenansicht in schematischer Darstellung eine Elektrolysevorrichtung gemäß einem Ausführungsbeispiel,
- Fig. 2: in einer perspektivischen Ansicht in schematischer Darstellung eine Elektrolysevorrichtung gemäß einem Ausführungsbeispiel, und
- Fig. 3: in einer Seitenansicht in schematischer Darstellung eine Elektrolyseanlage gemäß dem Stand der Technik.

Bei Bezugszeichen, die nicht explizit in Bezug auf eine einzelne Figur beschrieben werden, wird auf die anderen Figuren verwiesen.

### DETAILLIERTE BESCHREIBUNG DER FIGUREN

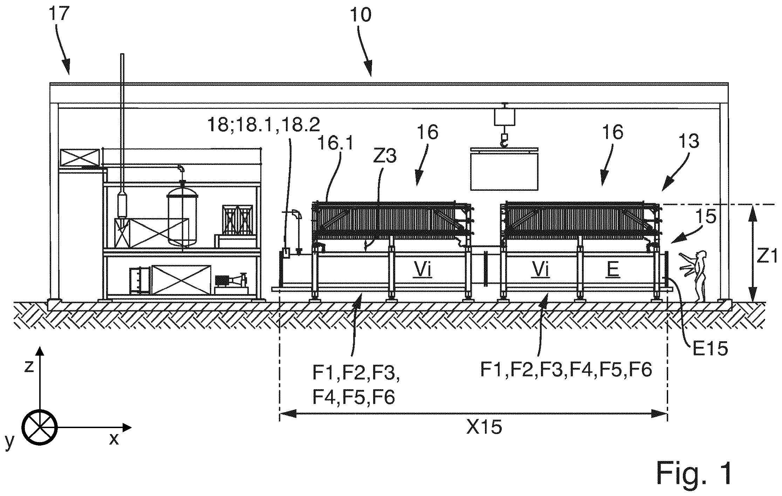

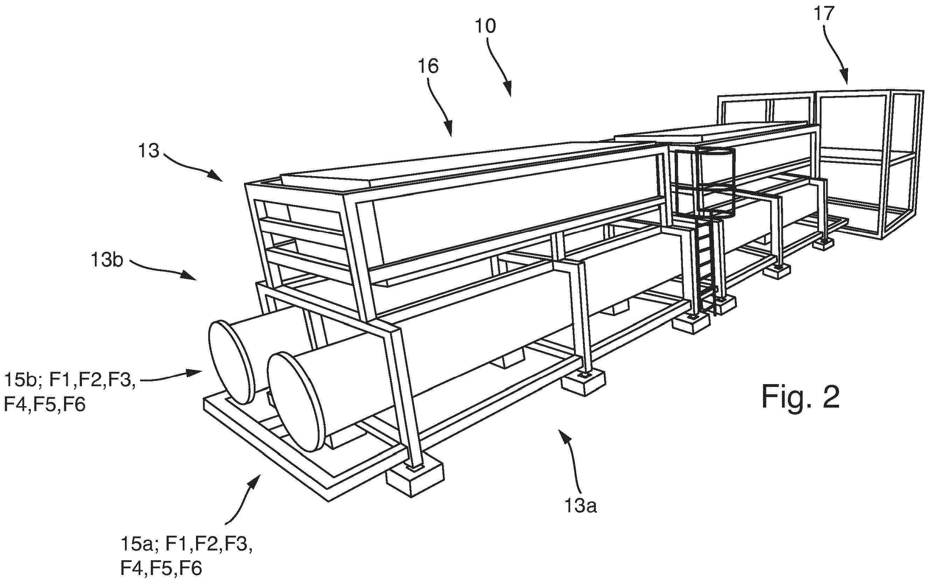

Die Fig. 1 und 2 zeigen eine Elektrolysevorrichtung 10 mit einem Elektrolyseur 13 und einem Mehrfunktions-Sammelbehälter MFH 15 (jeweils für Anolyt, Katholyt). Der Aufbau der Elektrolysevorrichtung 10 kann jeweils vergleichbar für die Anolyt-Seite 13a und die Katholyt-Seite 13b sein, insbesondere in symmetrischer Anordnung. Dazu können ein MFH 15a für die Anolyt-Seite und ein MFH 15b für die Katholyt-Seite vorgesehen sein. Diese beidseitigen MFH können wahlweise auch über eine Pendelleitung (nicht dargestellt) miteinander kommunizieren, insbesondere für den so genannten Kreuzbetrieb. Die Elektrolysevorrichtung 10 umfasst ferner wenigstens ein Gerüst 16 mit einer Vielzahl von Zellen 16.1.

Mittels eines Pumpsystems 17 und anlageninternem Elektrolytkreislauf kann Elektrolyt E durch die Elektrolysevorrichtung 10 geleitet werden. Messsensorik bzw. Elektrolyt-Analytik 18 umfasst insbesondere wenigstens einen Füllstandssensor 18.1 und wenigstens einen Temperatursensor 18.2, wobei die Messsensorik zumindest teilweise im jeweiligen MFH angeordnet sein kann.

Dank des jeweiligen MFH können eine Vielzahl von Funktionen mittels einfacher Anlagentechnik bzw. mittels nur einer anlagentechnischen Komponente übernommen werden, insbesondere kumulativ zusammen, bei vorteilhaftem konstruktivem Aufbau. Es hat sich gezeigt, dass der erfindungsgemäße MFH eine funktionale Integration von wenigstens sechs Funktionen ermögliche kann:

| | |
|---|---|
| erste Funktion F1: | Ableiten von Elektrolyt aus den Zellen; |
| zweite Funktion F2: | Phasentrennen; |
| dritte Funktion F3: | Sammeln; |
| vierte Funktion F4: | Puffern des Elektrolyten; |
| fünfte Funktion F5: | Bereithalten des Elektrolyten für einen Pumpkreislauf (Pumpvorlage); |
| sechste Funktion F6: | Entleerung (Drain) zumindest der Zellen, insbesondere zu Wartungszwecken. |

Mittels des jeweiligen MFH 15 kann zudem ein beträchtliches Sammel- bzw. Puffervolumen Vi bereitgestellt werden, insbesondere derart, dass der gesamte Platzbedarf der Anlage vergleichsweise moderat bleibt. Gemäß Fig. 1 erstreckt sich der MFH 15 in Längsrichtung x und stellt dabei eine beträchtliche freie Weglänge x15 im Innenvolumen Vi des MFH bereit, insbesondere eine freie Weglänge x15 größer als die Längserstreckung der Zellen bzw. des Gerüstes 16. Anders ausgedrückt: Ein jeweiliger MFH kann simultan mehrere Gerüste bedienen bzw. an mehrere Gerüste gekoppelt werden, was ebenfalls den apparativen Aufwand reduzieren kann. Der MFH liefert dabei auch ein großes Puffervolumen für größtmögliche prozessuale Flexibilität. Der Elektrolyt-Füllstand im Innenvolumen Vi ist hier mit E15 gekennzeichnet, um die optionale sechste Funktion F6 (Drain) zu beschreiben.

In Höhenrichtung z kann eine vergleichsweise niedrige Bauhöhe z1 der gesamten Elektrolyseanlage sichergestellt werden, insbesondere bei minimiertem Vertikal-Abstand z3 zwischen dem MFH und den Zellen 16.1.

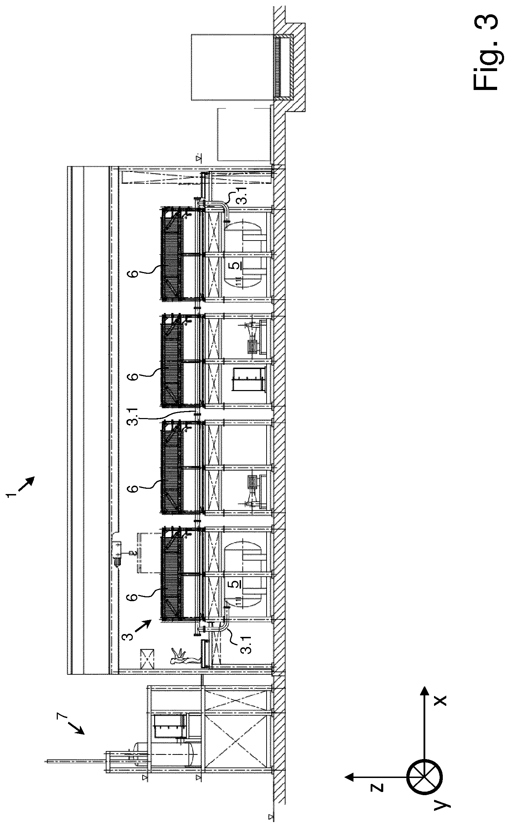

Fig. 3 beschreibt eine Elektrolyseanlage 1 gemäß dem Stand der Technik. Ein Elektrolyseur 3 und eine Vielzahl von Gerüsten 6 jeweils mit einer Vielzahl von Zellen sind auf einer Bau-/Montageebene oberhalb von Anolyt- oder Katholytbehältern 5 angeordnet. Die Gerüste 6 sind via eine oder mehrere (Freispiegel-)Ablaufleitungen 3.1 (Ablaufheader) jeweils für Anolyt, Katholyt an die Behälter 5 gekoppelt. Mittels eines Elektrolytsystems 7 mit Pumpsystem und Elektrolytkreislauf kann eine Kreislaufführung von Elektrolyt bewerkstelligt werden.

Die Elektrolyseanlage 1 gemäß dem Stand der Technik baut recht hoch. Dies hat auch (Kosten-)Nachteile, z.B. aufgrund des Erfordernisses großer Höhen von Montage-/Maschinenhallen. Zudem ist ein vergleichsweise großer vorrichtungstechnischer (apparativer) Aufwand erforderlich.

### BEZUGSZEICHENLISTE:

- 1: Elektrolyseanlage gemäß dem Stand der Technik
- 3: Elektrolyseur gemäß dem Stand der Technik
- 3.1: (Freispiegel-)Ablaufleitung bzw. Ablaufheader (jeweils für Anolyt, Katholyt)
- 5: Anolyt- oder Katholytbehälter gemäß dem Stand der Technik
- 6: Gerüst mit Zellen
- 7: Elektrolytsystem mit Pumpsystem und Elektrolytkreislauf
- 10: Elektrolysevorrichtung
- 13: Elektrolyseur
- 13a: Anolyt-Seite
- 13b: Katholyt-Seite
- 15: Mehrfunktions-Ablaufheader "MFH" (insbesondere jeweils für Anolyt, Katholyt)
- 15a: MFH für Anolyt-Seite
- 15b: MFH für Katholyt-Seite
- 16: Gerüst
- 16.1: Zelle
- 17: Elektrolytsystem bzw. Pumpsystem und anlageninterner Elektrolytkreislauf
- 18: Messsensorik bzw. Elektrolyt-Analytik
- 18.1: Füllstandssensor
- 18.2: Temperatursensor

- E: Elektrolyt
- E15: Elektrolyt-Füllstand im MFH
- F1: erste Funktion, insbesondere Ableiten von Elektrolyt aus den Zellen
- F2: zweite Funktion, insbesondere Phasentrennen
- F3: dritte Funktion, insbesondere Sammeln
- F4: vierte Funktion, insbesondere Puffern des Elektrolyten
- F5: fünfte Funktion, insbesondere Bereithalten des Elektrolyten für einen Pumpkreislauf (Pumpvorlage)
- F6: sechste Funktion, insbesondere Entleerung (Drain), insbesondere zur Wartung

- Vi: Sammel- bzw. Puffervolumen
- x: Längsrichtung
- x15: Länge bzw. freie Weglänge im Innenvolumen des MFH
- z: Höhenrichtung
- z1: Bauhöhe der gesamten Elektrolyseanlage
- z3: Vertikal-Abstand zwischen Elektrolyseur bzw. Zelle und Ablauf zum MFH

## Patentansprüche

1. Verfahren zum Bereitstellen von wenigstens einem Produktstrom, insbesondere Wasserstoff, durch Elektrolyse mittels eines Elektrolyseurs (13) mit einer Vielzahl von zu wenigstens einem Gerüst (16) zusammengefassten Elektrolyse-Zellen (16.1); wobei Elektrolyt aus den Zellen abgeleitet wird und in zwei Phasen getrennt wird, und wobei der Elektrolyt stromauf eines Pumpsystems (17) gesammelt wird;
**dadurch gekennzeichnet, dass** wenigstens die Funktionen Ableiten (F1), Phasentrennen (F2) und Sammeln (F3) integral zusammen in einem Mehrfunktions-Sammelbehälter (15) ausgeführt werden mittels wenigstens eines an die Zellen gekoppelten, füllstandsregelbaren, auch als Pumpenvorlage nutzbaren Mehrfunktions-Sammelbehälters, der als Mehrfunktions-Ablaufheader mit integriertem Funktionsumfang ausgebildet ist, wobei das Sammeln (F3) die beiden folgenden Funktionen umfasst: Puffern (F4) des Elektrolyten während einer vordefinierbaren Mindestverweilzeit, und Zwischenlagern (F5) des Elektrolyten mit einem vordefinierbaren Mindestvolumen oder Mindest-Füllstand zum Bereithalten eines Mindestvolumens als Pumpenvorlage.

2. Verfahren nach dem vorhergehenden Verfahrensanspruch, wobei stromab vom Sammeln ein Pumpen des Elektrolyten mittels des Pumpsystems (17) erfolgt, insbesondere ein Rückführen zu den Zellen (16.1), wobei der gesamte Elektrolyt, der aus dem Mehrfunktions-Sammelbehälter herausgefördert wird, in seiner Gesamtheit wieder in den Mehrfunktions-Sammelbehälter zurückgeführt wird.

3. Verfahren nach einem der vorhergehenden Verfahrensansprüche, wobei Wasserstoff durch Wasserelektrolyse bereitgestellt wird, insbesondere mittels einer Elektrolysevorrichtung (10) mit einem Leistungsvermögen im Bereich von 1.000 bis 4.500 Nm3/h.

4. Verfahren nach einem der vorhergehenden Verfahrensansprüche; wobei wenigstens eine weitere Funktion Entleeren (F6) der Zellen (16.1) integral zusammen mit den Funktionen Ableiten (F1) und Sammeln (F3) in dem Mehrfunktions-Sammelbehälter ausgeführt wird.

5. Elektrolysevorrichtung (10) eingerichtet zum Bereitstellen von wenigstens einem Produktstrom, insbesondere Wasserstoff, insbesondere durch Wasserelektrolyse, insbesondere eingerichtet zum Bereitstellen des Produktstroms gemäß einem Verfahren nach einem der vorhergehenden Verfahrensansprüche, mit:
einem Elektrolyseur (13) mit einer Vielzahl von zu wenigstens einem Gerüst (16) zusammengefassten Elektrolyse-Zellen (16.1), wobei der Elektrolyseur eine Anolytseite (13a) und eine Katholytseite (13b) aufweist;
wobei die Elektrolysevorrichtung (10) eingerichtet ist zum Ableiten von Elektrolyt aus den Zellen und zur Phasentrennung des Elektrolyten in zwei Phasen, insbesondere jeweils an der jeweiligen Seite (13a, 13b) des Elektrolyseurs, und wobei die Elektrolysevorrichtung ferner eingerichtet ist zum Sammeln des Elektrolyten stromauf eines Pumpsystems (17);
**dadurch gekennzeichnet, dass** die Elektrolysevorrichtung (10) wenigstens einen an die Zellen und an das Pumpsystem (17) gekoppelten Mehrfunktions-Sammelbehälter (15) aufweist, der als Mehrfunktions-Ablaufheader ausgebildet ist, und dadurch eingerichtet ist zum integralen Bereitstellen von wenigstens fünf in den Mehrfunktions-Sammelbehälter integrierten Funktionen, nämlich Ableiten (F1), Phasentrennen (F2) und Sammeln (F3) jeweils mittels des Mehrfunktions-Sammelbehälters, insbesondere an der jeweiligen Seite (13a, 13b) des Elektrolyseurs, sowie der Funktion Puffern (F4) des Elektrolyten während einer vordefinierbaren Mindestverweilzeit und der Funktion Zwischenlagern (F5) des Elektrolyten mit einem vordefinierbaren Mindestvolumen oder Mindest-Füllstand zum Bereithalten eines Mindestvolumens als Pumpenvorlage.

6. Elektrolysevorrichtung nach dem vorhergehenden Vorrichtungsanspruch, wobei die Elektrolysevorrichtung (10) ferner eingerichtet ist zum integralen Bereitstellen auch der in den Mehrfunktions-Sammelbehälter (15) integrierten Funktion Entleerung (F6) der Zellen mittels des Mehrfunktions-Sammelbehälters, insbesondere zu Wartungszwecken.

7. Elektrolysevorrichtung nach einem der vorhergehenden Vorrichtungsansprüche, wobei der Mehrfunktions-Sammelbehälter (15) unterhalb des Elektrolyseurs (13) angeordnet ist, insbesondere jeweils an der jeweiligen Seite (13a, 13b); und/oder wobei der Mehrfunktions-Sammelbehälter zentrisch in Bezug auf den Elektrolyseur angeordnet ist; und/oder wobei der Mehrfunktions-Sammelbehälter in einer niedrigeren Höhenposition relativ zu den Zellen (16.1) angeordnet ist, insbesondere an der jeweiligen Seite.

8. Elektrolysevorrichtung nach einem der vorhergehenden Vorrichtungsansprüche, wobei der Mehrfunktions-Sammelbehälter (15) wenigstens eine integrierte Messsensorik (18) aufweist, insbesondere wenigstens einen Füllstandssensor (18.1) für Elektrolyt und/oder wenigstens einen Temperatursensor (18.2).

9. Elektrolysevorrichtung nach einem der vorhergehenden Vorrichtungsansprüche, wobei die Elektrolysevorrichtung zwei an die Zellen koppelbare Mehrfunktions-Sammelbehälter (15a, 15b) aufweist, nämlich an der jeweiligen Seite des Elektrolyseurs (13) für Anolyt und Katholyt, wobei die Mehrfunktions-Sammelbehälter insbesondere seitlich versetzt zueinander angeordnet sind, insbesondere mittig in Bezug auf den Elektrolyseur.

10. Elektrolysevorrichtung nach einem der vorhergehenden Vorrichtungsansprüche, wobei die Elektrolysevorrichtung zwei an die Zellen koppelbare Mehrfunktions-Sammelbehälter aufweist, welche über eine Pendelleitung miteinander verbunden sind und/oder welche mittels einer füllstandsabhängigen Durchflussregelung und/oder Nebenstromregelung aneinander gekoppelt sind.

## Claims

1. A method for providing at least one product stream, in particular hydrogen, by electrolysis by means of an electrolyzer (13) having a multiplicity of electrolysis cells (16.1) combined to form at least one framework (16); wherein electrolyte is discharged from the cells and separated into two phases, and wherein the electrolyte is collected upstream of a pump system (17);
**characterized in that** at least the functions of discharge (F1), phase separation (F2) and collection (F3) are carried out integrally together in a multifunctional collection container (15) by means of at least one multifunctional collection container with a regulatable filling level, which is coupled to the cells and which is also usable as a buffered pump supply, wherein the multifunctional collection container (15) is a multifunctional outflow header with an integrated functional scope, the collection (F3) comprising the following two functions: buffering (F4) the electrolyte during a predefinable minimum residence time and temporarily storing (F5) the electrolyte with a predefinable minimum volume or minimum filling level in order to make a minimum volume available as a buffered pump supply.

2. The method as claimed in the preceding method claim, wherein pumping of the electrolyte by means of the pump system (17), in particular recycling to the cells (16.1), takes place downstream of the collection, wherein all of the electrolyte which is delivered from the multifunctional collection container is recycled in its entirety back into the multifunctional collection container.

3. The method as claimed in one of the preceding method claims, wherein hydrogen is provided by water electrolysis, in particular by means of an electrolysis device (10) having a capacity in the range of from 1000 to 4500 Nm3/h.

4. The method as claimed in one of the preceding method claims; wherein at least one further function emptying (F6) the cells (16.1) is carried out integrally together with the function of discharge (F1) and collection (F3) in the multifunctional collection container.

5. An electrolysis device (10) adapted for providing at least one product stream, in particular hydrogen, in particular by water electrolysis, in particular adapted for providing the product stream according to a method as claimed in one of the preceding method claims, having:
an electrolyzer (13) comprising a multiplicity of electrolysis cells (16.1) combined to form at least one framework (16), the electrolyzer having an anolyte side (13a) and a catholyte side (13b);
wherein the electrolysis device (10) is adapted for discharging electrolyte from the cells and for phase separation of the electrolyte into two phases, in particular respectively at the respective side (13a, 13b) of the electrolyzer, and wherein the electrolysis device is furthermore adapted for collecting the electrolyte upstream of a pump system (17);
**characterized in that** the electrolysis device (10) comprises at least one multifunctional collection container (15) coupled to the cells and the pump system (17), which multifunctional collection container (15) is a multifunctional outflow header with an integrated functional scope and is thereby adapted for integrally providing at least three functions integrated into the multifunctional collection container, namely discharge (F1), phase separation (F2) and collection (F3) respectively by means of the multifunctional collection container, in particular at the respective side (13a, 13b) of the electrolyzer, as well as the function of buffering (F4) the electrolyte during a predefinable minimum residence time and the function of temporarily storing (F5) the electrolyte with a predefinable minimum volume or minimum filling level in order to make a minimum volume available as a buffered pump supply.

6. The electrolysis device as claimed in the preceding device claim, wherein the electrolysis device (10) is furthermore adapted for also integrally providing the function, integrated into the multifunctional collection container (15), of emptying (F6) the cells by means of the multifunctional collection container, in particular for maintenance purposes.

7. The electrolysis device as claimed in one of the preceding device claims, wherein the multifunctional collection container (15) is arranged below the electrolyzer (13), in particular respectively at the respective side (13a, 13b); and/or wherein the multifunctional collection container is arranged centrally in relation to the electrolyzer; and/or wherein the multifunctional collection container is arranged at a lower height position relative to the cells (16.1), in particular at the respective side.

8. The electrolysis device as claimed in one of the preceding device claims, wherein the multifunctional collection container (15) comprises at least one integrated measuring sensor unit (18), in particular at least one filling level sensor (18.1) for electrolyte and/or at least one temperature sensor (18.2).

9. The electrolysis device as claimed in one of the preceding device claims, wherein the electrolysis device comprises two multifunctional collection containers (15a, 15b) which can be coupled to the cells, namely at the respective side of the electrolyzer (13) for anolyte and catholyte, wherein the multifunctional collection containers are arranged in particular laterally offset with respect to one another, in particular at least approximately centrally in relation to the electrolyzer.

10. The electrolysis device as claimed in one of the preceding device claims, wherein the electrolysis device comprises two multifunctional collection containers which can be coupled to the cells, which are connected to one another by means of an equilibrating line and/or which are coupled to one another by means of filling level-dependent flow regulation and/or bypass regulation.

## Revendications

1. Procédé de fourniture d'au moins un flux de produit, notamment d'hydrogène, par électrolyse au moyen d'un électrolyseur (13) comprenant un grand nombre de cellules d'électrolyse (16.1) associées pour former au moins une structure (16) ; l'électrolyte étant évacué des cellules et séparé en deux phases, et l'électrolyte étant collecté en amont d'un système de pompage (17) ;
**caractérisé en ce qu'**au moins les fonctions d'évacuation (F1), de séparation de phases (F2) et de collecte (F3) sont réalisées conjointement dans un récipient collecteur multifonction (15) au moyen d'au moins un récipient collecteur multifonction qui est couplé aux cellules, dont le niveau de remplissage peut être régulé, qui peut également être utilisé comme réservoir de pompe et qui est conçu comme une tête d'évacuation multifonction ayant une gamme de fonctions intégrées, la collecte (F3) comprenant les deux fonctions suivantes : tamponnage (F4) de l'électrolyte pendant un temps de séjour minimal qui peut être prédéfini, et stockage intermédiaire (F5) de l'électrolyte avec un volume minimal qui peut être prédéfini ou un niveau de remplissage minimal pour fournir un volume minimal en tant qu'alimentation de pompe.

2. Procédé selon la revendication de procédé précédente, le pompage de l'électrolyte au moyen du système de pompage (17), notamment le retour aux cellules (16.1), étant effectué en aval de la collecte, tout l'électrolyte qui est transporté hors du récipient collecteur multifonction étant ramené en totalité au récipient collecteur multifonction.

3. Procédé selon l'une des revendications de procédé précédentes, l'hydrogène étant fourni par électrolyse de l'eau, en particulier au moyen d'un dispositif d'électrolyse (10) ayant un rendement dans la gamme allant de 1000 à 4500 Nm3/h.

4. Procédé selon l'une des revendications de procédé précédentes, au moins une autre fonction de vidange (F6) des cellules (16.1) étant réalisée conjointement avec les fonctions d'évacuation (F1) et de collecte (F3) dans le récipient collecteur multifonction.

5. Dispositif d'électrolyse (10) conçu pour fournir au moins un flux de produit, notamment d'hydrogène, notamment par électrolyse de l'eau, notamment pour fournir le flux de produit selon un procédé selon l'une des revendications de procédé précédentes, ledit dispositif comprenant :
un électrolyseur (13) comprenant un grand nombre de cellules d'électrolyse (16.1) réunies en au moins une structure (16), l'électrolyseur comportant un côté anolyte (13a) et un côté catholyte (13b) ;
le dispositif d'électrolyse (10) étant conçu pour évacuer l'électrolyte des cellules et pour séparer l'électrolyte en deux phases, en particulier du côté respectif (13a, 13b) de l'électrolyseur, et le dispositif d'électrolyse étant en outre conçu pour collecter l'électrolyte en amont d'un système de pompage (17) ;
**caractérisé en ce que** le dispositif d'électrolyse (10) comporte au moins un récipient collecteur multifonction (15) qui est couplé aux cellules et au système de pompage (17) et qui est conçu comme une tête d'évacuation multifonction, et conçu ainsi pour fournir intégralement au moins cinq fonctions intégrées dans le récipient collecteur multifonction, à savoir l'évacuation (F1), la séparation de phase (F2) et la collecte (F3) à chaque fois au moyen du récipient collecteur multifonction, en particulier sur le côté respectif (13a, 13b) de l'électrolyseur, ainsi que la fonction de tamponnage (F4) de l'électrolyte pendant un temps de séjour minimum qui peut être prédéfini et la fonction de stockage intermédiaire (F5) de l'électrolyte avec un volume minimum, ou un niveau de remplissage minimum, qui peut être prédéfini pour fournir un volume minimum en tant qu'alimentation de pompe.

6. Dispositif d'électrolyse selon la revendication de dispositif précédente, le dispositif d'électrolyse (10) étant en outre conçu pour fournir intégralement la fonction de vidange (F6) des cellules au moyen du récipient collecteur multifonctions, notamment à des fins d'entretien, ladite fonction de vidange étant également intégrée dans le récipient collecteur multifonctions (15).

7. Dispositif d'électrolyse selon l'une des revendications de dispositif précédentes, le récipient collecteur multifonction (15) étant disposé au-dessous de l'électrolyseur (13), en particulier sur le côté respectif (13a, 13b) ; et/ou le récipient collecteur multifonction étant disposé au centre par rapport à l'électrolyseur ; et/ou le récipient collecteur multifonction étant disposé à une position en hauteur plus basse par rapport aux cellules (16.1), en particulier sur le côté respectif.

8. Dispositif d'électrolyse selon l'une des revendications de dispositif précédentes, le récipient collecteur multifonctionnel (15) comportant au moins un système de capteur de mesure intégré (18), en particulier au moins un capteur de niveau de remplissage (18.1) destiné à l'électrolyte et/ou au moins un capteur de température (18.2).

9. Dispositif d'électrolyse selon l'une des revendications de dispositif précédentes, le dispositif d'électrolyse comportant deux récipients collecteurs multifonction (15a, 15b) qui peuvent être couplés aux cellules, à savoir du côté respectif de l'électrolyseur (13) pour l'anolyte et le catholyte, les récipients collecteurs multifonctions étant notamment disposés latéralement en étant décalés les uns des autres, notamment au milieu par rapport à l'électrolyseur.

10. Dispositif d'électrolyse selon l'une des revendications de dispositif précédentes, le dispositif d'électrolyse comportant deux récipients collecteurs multifonctions qui peuvent être couplés aux cellules et qui sont reliés les uns aux autres par une ligne pendulaire et/ou qui sont couplés les uns aux autres au moyen d'une régulation de débit dépendant du niveau et/ou d'une régulation du courant secondaire.
